# EUROPÄISCHE PATENTSCHRIFT

(11) **EP 1 544 060 B1**
(45) Veröffentlichungstag und Bekanntmachung des Hinweises auf die Patenterteilung: **22.08.2007**
(21) Anmeldenummer: 04029835.8
(22) Anmeldetag: 16.12.2004
(51) Int. Cl.: B60R 21/26

(54) **Gasgenerator**
Gas generator
Générateur de gaz

(30) Priorität: 17.12.2003 DE 20319564 U
(43) Veröffentlichungstag der Anmeldung: 22.06.2005
(73) Patentinhaber: TRW Airbag Systems GmbH, 84544 Aschau am Inn (DE)
(72) Erfinder: Bergmann, Maximilian, 93164 Laaber (DE); Hofmann, Achim, 84570 Polling (DE); Holzapfel, Jens, 18258 Bröbberow (DE); Seidl, Lorenz, 83562 Freimehring (DE); Seddig, Monika, 18299 Laage (DE); Jung, Christian, 84453 Mühldorf (DE); Tengler, Wolfgang, 83246 Oberwössen (DE); Spitzenberger, Andreas, 84544 Aschau am Inn (DE)
(74) Vertreter: Kitzhofer, Thomas

(56) Entgegenhaltungen:
- EP-A- 1 323 595
- WO-A-01/42047
- US-A- 6 155 600
- US-B1- 6 206 414
- US-B1- 6 213 503

## Beschreibung

Die Erfindung betrifft einen Gasgenerator, nach dem Oberbegriff des Anspruchs 1.

Aus der gattungsgemäßen US 6,206,414 B1 ist in deren Figur 6 ein Gasgenerator bekannt, bei dem zwei Zünder jeweils über eine Membrane gegenüber zugeordneten Brennkammern abgetrennt ist. Die Brennkammern bilden ein axiales Ende einer mit Druckgas gefüllten Druckkammer, die an dem den Zündern gegenüberliegenden Ende durch eine weitere Membrane geschlossen ist. Im Bereich dieser zweiten Membrane ist noch eine dritte Membrane angeordnet. Diese zweite und dritte Membrane reißen bei unterschiedlichen Berstdrücken, abhängig davon, welcher Zünder aktiviert wurde.

Ein weiterer Gasgenerator ist aus der WO 01/42047 A2 bekannt. Die zweite Öffnung, die durch die zweite Membran geschlossen wird, ist die Ausströmöffnung für das freiwerdende Gas, das von dieser Öffnung aus in ein Fahrzeuginsassen-Rückhaltesystem strömt. Die zweite Membran wird gemäß dieses Standes der Technik durch eine Schockwelle zerstört, die sich nach Zerstören der ersten Membran ergibt und die die Druckkammer durchläuft.

Die Erfindung schafft einen Gasgenerator, bei dem ebenfalls die zweite Membran durch die entstehende Druckwelle zerstört wird, wobei aber versucht werden soll, das Öffnungsverhalten (Öffnungsgeschwindigkeit und Reproduzierbarkeit) zu verbessern.

Dies wird durch einen Gasgenerator nach Anspruch 1 erreicht. Natürlich ist für den Berstdruck nicht nur die Ausbildung der Membran selbst, sondern auch deren Umgebung (angrenzende Wände) mit verantwortlich, so dass die Prüfung der unterschiedlichen Berstdrücke in der konkreten Einbausituation ermittelt werden muß. Bei der Ermittlung des Druckes ist auf den Betriebszustand abzustellen. Die erste Membran wird ja von Seiten der Brennkammer aus zerstört, und zwar durch den Druck beim Aktivieren der Brennkammer. Während der Druckerhöhung auf Seiten der Brennkammer ist stets ein Gegendruck auf der angrenzenden Druckkammerseite der Membran vorhanden. Die zweite Membran wird dann durch die Druckwelle zerstört, die sich beim Zerstören der ersten Membran ergibt. Der Druck, der beim Zerstören der zweiten Membran dann in der Druckkammer herrscht, ist der Berstdruck für die zweite Membran. Es wird also beim Vergleich der Drücke auf den erforderlichen Öffnungsdruck einerseits auf Seiten der Brennkammer und andererseits, was die zweite Membran anbelangt, auf Seiten der Druckkammer abgestellt.

Im Stand der Technik war stets die erste Membran wesentlich kleiner als die zweite Membran und hatte einen geringeren Berstdruck als die zweite. Dies wurde deshalb so ausgeführt, weil die erste Membran sehr schnell geöffnet werden sollte, so dass aus dem Gasgenerator schnell Gas ausströmen konnte. Die Erfindung sieht nun überraschenderweise die gegenteilige Lehre vor. Durch den insgesamt sehr hohen Berstdruck der ersten Membran muß sich vor dieser ein hoher Druck aufbauen, bis die Druckkammer geöffnet wird. Das bedeutet, wenn die Druckkammer geöffnet wird, ist außerhalb derselben ein höherer Gasdruck vorhanden als bei bisherigen Ausführungsformen. Damit wird aber die Druckwelle stärker, die die Druckkammer durchläuft und zur Zerstörung der zweiten Membran führen muß. Aufgrund der stärkeren Druckwelle wird jedoch die zweite Membrane extrem schnell geöffnet, so dass der oben beschriebene, ursprünglich erwartete Nachteil bei der erfindungsgemäßen Lösung nicht auftritt.

Gemäß der bevorzugten Ausführungsform besitzt eine der ersten Membran zugeordnete erste Öffnung oder Öffnungsanordnung eine wenigstens gleich große Querschnittfläche wie eine der zweiten Membran zugeordnete zweite Öffnung oder Öffnungsanordnung besitzt, wobei die Querschnittsfläche der ersten Öffnung/Öffnungsanordnung aber vorzugsweise größer als die der zweiten Öffnung/Öffnungsanordnung ist. Wenn die durch den ersten Zünder freigelegte erste Öffnung relativ groß ist, wird der abrupte Druckabfall zwischen Druckkammer und angrenzender Kammer ebenfalls sehr groß sein, was zu einer sehr starken Schockwelle führt. Diese relativ starke Schockwelle kann dann bei einer gleich großen oder kleineren zweiten Öffnung und einer dementsprechend dimensionierten zweiten Membran zu einem leichten Öffnen derselben führen.

Es gibt auch Ausführungsformen, bei denen eine Blende unmittelbar in der Nähe der Membran angeordnet ist. Sollte diese Blende in einem Abstand von max. 15 mm in der Nähe der Membran angeordnet sein und einen kleineren Durchmesser als die unmittelbar durch die Membran geschlossene Öffnung haben, so würde diese Blende, wenn ihr Blendendurchmesser geringer als der der Öffnung ist, die Druckverhältnisse bestimmen, da der Ausgleichsraum zwischen der Membran und der Blende zu klein wäre, als dass es noch einen Ausgleichseffekt ergäbe. Aus diesem Grund wird definiert, dass Blenden, die max. 15 mm stromauf- und stromabwärts der Membran angeordnet sind und deren gesamte durchströmte Querschnittsfläche kleiner als die Querschnittsfläche der durch die zugeordnete Membran geschlossene Öffnung ist, für den Vergleich der beiden Querschnittsflächen der Öffnungen gemäß Anspruch 2 herangezogen wird.

Gemäß der bevorzugten Ausführungsform ist jedoch keine Blende oder dergleichen vorgesehen, so dass die durch die erste Membran geschlossene erste Öffnung eine wenigstens gleich große Querschnittsfläche wie die durch die zweite Membran zugeordnete zweite Öffnung besitzt.

Die beiden Membranen sollten zueinander fluchtend ausgerichtet sein, so daß die Schockwelle unmittelbar auf die zweite Membran auftreffen kann.

Gemäß der bevorzugten Ausführungsform ist die Druckkammer langgestreckt ausgebildet, und an den Stirnseiten sind die Öffnungen vorgesehen. Vorzugsweise ist der Gasgenerator in diesem Zusammenhang ein langgestreckter Rohrgasgenerator, dessen Länge wenigstens das Dreifache von dessen Außendurchmesser beträgt.

Der Abstand der Membran sollte zwischen dem Fünf- bis Dreizehnfachen des größten Innendurchmessers der vorzugsweise über den größten Bereich kreiszylindrischen Druckkammer liegen.

Die Querschnittsfläche der ersten Öffnung, so hat sich herausgestellt, sollte etwa 1,1 (vorzugsweise 1,3) bis zehnmal größer, vorzugsweise 1,3- bis dreimal größer als die der zweiten Öffnung sein. Dieses Verhältnis hat sich als besonders vorteilhaft für das Öffnungsverhalten erwiesen.

Im Hinblick auf die einfache Ausgestaltung des erfindungsgemäßen Gasgenerators schlägt eine Ausführungsform vor, die erste Membran unmittelbar an der Innenseite der zylindrischen Außenwand der Druckkammer anzubringen. Eine andere Ausführungsform, die ebenfalls recht einfach umgesetzt werden kann, schlägt vor, die erste Membran als einstückigen Bestandteil der zylindrischen Außenwand der Druckkammer auszuführen. D.h., die Membran ist nicht etwa ein separates, an die Außenwand angeschweißtes Teil, sondern wird gleich von Haus aus einstückig mit der Außenwand hergestellt. Dies kann beispielsweise dadurch erreicht werden, daß die Druckkammer durch eine als separates Teil ausgebildete Zylinderwand und zusätzlich durch ein hülsenförmiges Verschlußteil begrenzt wird. Das Verschlußteil hat einen Boden, der die erste Membran bildet.

Eine weitere Verbesserung im Hinblick auf ein schnelles, in engen Grenzen vorbestimmbares Zerstören der zweiten Membran wird erzielt, indem sich die Druckkammer innenseitig zur zweiten Membran verjüngt, vorzugsweise nahe an dieser. Damit wird die Stoßwelle ähnlich wie bei einer Linse gebündelt, um den dann auf die zweite Membran einwirkenden Druck zu erhöhen. Dieses Verjüngen sollte nicht dadurch erfolgen, daß beispielsweise senkrecht zur Längsachse und damit der Hauptströmungsrichtung liegende Absätze vorgesehen sind. Diese würden nämlich die Stoßwelle reflektieren. Vielmehr ist vorgesehen, daß der verjüngte Abschnitt in Strömungsrichtung von der ersten zur zweiten Membran ausschließlich solche Flächen besitzt, die schräg zur zweiten Membran hin gerichtet sind. Insbesondere eine trichterförmige Verjüngung ist hier vorteilhaft.

Auch der Druck in der Druckkammer vor ihrem Öffnen ist für das Öffnungsverhalten wichtig und sollte zwischen 240 und 1500 bar liegen.

Als Druckgas empfiehlt sich Helium, ein Helium/Argongemisch oder ein Helium/Argon/Sauerstoffgemisch.

Die zweite Membran ist dünner auszuführen als die erste Membran, vorzugsweise sogar so dünn, daß sie gerade dem Befülldruck plus einem Sicherheitszuschlag bei einer Temperatur von 85°C standhält.

Obwohl theoretisch auch ein einzelner Zünder, ggf. mit einer Verstärkerladung, ausreicht, um die erste Membran zu zerstören, sieht die bevorzugte Ausführungsform noch einen zusätzlichen pyrotechnischen Treibsatz zwischen Zünder und erster Membran vor, durch den Heißgas erzeugt wird, das sich mit dem Kaltgas in der Druckkammer mischt.

Gerade wenn ein pyrotechnischer Treibsatz vorgesehen ist, kann es vorteilhaft sein, vor der ersten Membran ein Sieb anzuordnen, das beim Abbrand erzeugte Partikel zurückhält.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine erste Ausführungsform des erfindungsgemäßen Gasgenerators und
- Figur 2 eine Längsschnittansicht durch eine zweite Ausführungsform des erfindungsgemäßen Gasgenerators.

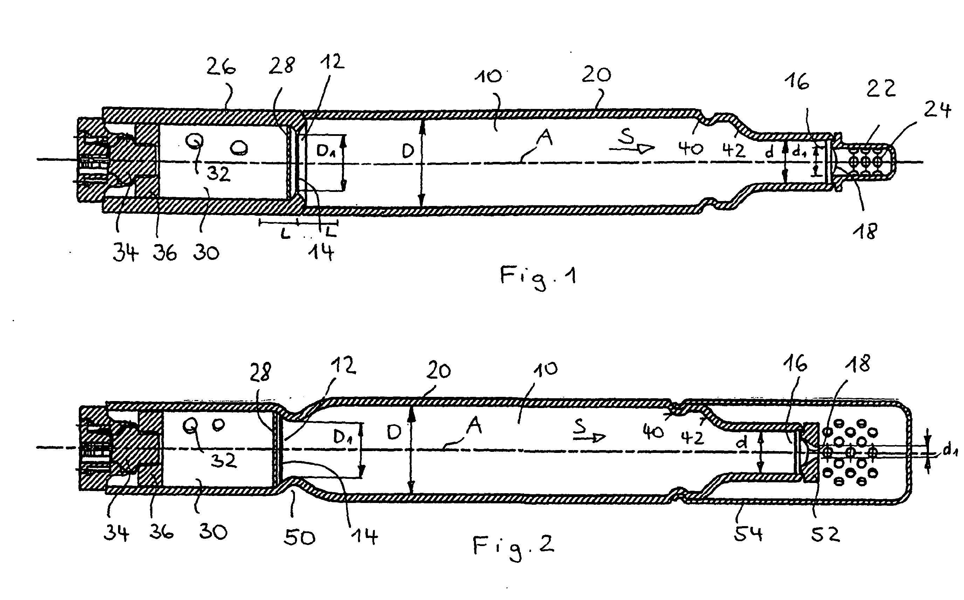

In Figur 1 ist ein langgestreckter Rohrgasgenerator zum Aufblasen eines Gassacks dargestellt, der aus sehr wenigen Einzelteilen besteht und sich durch ein gutes, reproduzierbares Öffnungsverhalten auszeichnet. Der Gasgenerator hat eine zentrale, langgestreckte, zylindrische Druckkammer 10, die mit einem Druckgas aus Helium, einem Helium/Argongemisch oder einem Helium/Argon/Sauerstoffgemisch bei einem Druck zwischen 240 bis 1500 bar gefüllt ist. Die Druckkammer 10 hat eine erste, große Öffnung 12 an der linken Stirnseite, die durch eine erste Membran 14 geschlossen ist, sowie am entgegengesetzten stirnseitigen Ende eine zweite, maximal gleich große, vorzugsweise aber kleinere Öffnung 16, die durch eine zweite, kleinere Membran 18 geschlossen ist. Die Konstruktion ist so ausgeführt, dass der Berstdruck zum Freilegen der ersten Öffnung 12 größer ist als zum Freilegen der zweiten Öffnung 16. Die Druckkammer 10 wird seitlich durch eine zylindrische Außenwand mit einer als separates Teil ausgebildeten Zylinderwand 20 begrenzt, an die im Bereich der zweiten Öffnung 16 ein buchsenförmiger Diffusor 22 angeschweißt ist, welcher mit radialen Ausströmöffnungen 24 versehen ist. Die Membran 18 ist an eine Stirnseite des Diffusors 22 angeschweißt, der damit auch als Membranhalter fungiert.

Auf der entgegengesetzten Stirnseite wird ein hülsenförmiges Verschlußteil 26 stirnseitig an die Zylinderwand 20 angeschweißt. Der Boden des hülsenförmigen Verschlußteils 26 verjüngt sich radial einwärts stark und geht einstückig in die erste Membran 14 über. Die erste Membran 14 ist damit kein Einzelteil, das an eine Außenwand angeschweißt wird. Vor der ersten Membran 14 ist eine Blende in Form eines Siebs 28 angeordnet, das eine Brennkammer 30 begrenzt, welche mit einem pyrotechnischen Treibsatz 32 gefüllt ist. Von der offenen Stirnseite des hülsenförmigen Verschlußteils 26 aus ragt ein Zünder 34 in das Verschlußteil 26 hinein. Dieser ist zusätzlich auch noch in einer die Brennkammer 30 begrenzenden scheibenförmigen Stirnwand 36 positioniert.

Wie Figur 1 zu entnehmen ist, ist die Zylinderwand 20 ausgehend von der ersten Membran 14 gleichmäßig und kreiszylindrisch dimensioniert und besitzt über fast die gesamte Länge einen gleichbleibenden Innendurchmesser. Zur zweiten Membran 18 hin jedoch ist die Zylinderwand 20 flaschenhalsförmig verjüngt ausgeführt. In diesem sich verjüngenden Abschnitt sind die in Strömungsrichtung S (Axialrichtung) weisenden Flächen so ausgeführt, daß sie zur zweiten Membran 18 hin schräg geneigt sind. Diese in Strömungsrichtung S weisenden Flächen sind mit 40, 42 bezeichnet. Kurz vor der zweiten Membran 18 hat die Druckkammer 20 einen Abschnitt mit gleichmäßigem Innendurchmesser.

Die zweite Membran 18 ist nicht nur dünner als die erste Membran 14, sie ist vom Durchmesser her auch deutlich kleiner, ebenso wie die zweite Öffnung 16 (Durchmesser d₁) deutlich kleiner als die erste Öffnung 12 ist. Die Querschnittsfläche der zugeordneten ersten Öffnung, hier der Öffnung 12 ist etwa 1,1- bis zehnmal größer als die der zugeordneten zweiten Öffnung, vorzugsweise etwa 1,3- bis dreimal größer. Im gezeigten Ausführungsbeispiel ist der Durchmesser D1 konkret etwa doppelt so groß wie d1.

Wie zuvor schon erläutert, sollte gemäß der bevorzugten Ausführungsform die der ersten Membran 14 zugeordnete erste Öffnung eine wenigstens gleich große Querschnittsfläche wie der zweiten Membran 18 zugeordnete zweite Öffnung besitzen. Die zugeordnete Öffnung einer Membran ist diejenige Öffnung oder Öffnungsanordnung mit geringstem Durchströmquerschnitt in einem Abstand L stromaufwärts und stromabwärts der Membran 14, 18 bzw. der durch die Membran unmittelbar verschlossenen Öffnung 12, 16 (s. Fig. 1). Bei der Ausführungsform nach Figur 1 ist links, d.h. stromaufwärts der Membran 14 ein Sieb 28 angeordnet, welches als Blende angesehen werden kann. Da die gesamte durchströmte Querschnittsfläche des Siebes 28 d.h. deren Öffnungsanordnung aber größer als die Querschnittsfläche der Öffnung 12 ist, wird zum Vergleich der den Membranen 14, 18 zugeordneten Öffnungen die Öffnung 12 herangezogen. In einem Abstand von max. 15 mm stromaufwärts und stromabwärts der Membran 18 sind keine Blenden vorgesehen, die den Strömungsquerschnitt verengen, so dass auch hier die Öffnung 16 mit Durchmesser d1 als Vergleichsmaßstab zum Durchmesser D 1 der ersten Öffnung 12 herangezogen wird.

Auch der Abstand der Membran 14, 18 zueinander ist wichtig, er beträgt zwischen etwa dem Fünf- bis dem Dreizehnfachen des größten Innendurchmessers D der Druckkammer 10. Die Verjüngung im Bereich der zweiten Öffnung 16 beträgt im übrigen wenigstens 30 % gegenüber dem größten Durchmesser D, d.h. der Durchmesser d beträgt weniger als 70 % des Durchmessers D.

Nach dem Aktivieren des Zünders 34 wird der pyrotechnische Treibsatz 32 abgebrannt, und das entstehende Druckgas zerstört die erste Membran 14. Es ergibt sich ein abrupter Druckabfall, durch den eine sogenannte Stoßwelle erzeugt wird, die sich in Strömungsrichtung S schlagartig durch die Druckkammer 10 fortsetzt, im Bereich des verjüngten Endes gebündelt wird und die zweite Membran 18 schließlich zerstört, so daß das Gemisch aus Druckgas und Heißgas aus dem Gasgenerator austritt.

Die Ausführungsform nach Figur 2 entspricht im wesentlichen der in Figur 1 gezeigten, so daß für funktionsgleiche Teile die bereits eingeführten Bezugszeichen verwendet werden. Bezüglich der Abmaße der Membranen und der Druckkammer 10 kann auf die obigen Ausführungen verwiesen werden. Zu betonen ist, daß die einzelnen unterschiedlichen Merkmale in den Figuren 1 und 2 beliebig miteinander kombiniert werden können.

Die Ausführungsform nach Figur 2 hat kein hülsenförmiges Verschlußteil 26, die Zylinderwand 20 erstreckt sich vielmehr auch bis über die Brennkammer 30 hinaus. Eine ringförmige Vertiefung 50 dient der Positionierung und Befestigung der ersten Membran 14, die als separates Teil ausgeführt und durch Kondensatorentladungsschweißen innenseitig an der Zylinderwand 20 angebracht ist. Am gegenüberliegenden Ende ist ein Membranhalter 52 für die zweite Membran 18 vorgesehen, der ohne Diffusorabschnitt ausgeführt ist, sondern ein düsenförmiges Ende hat. Um das verjüngte Ende herum ist dann eine Diffusorkappe 54 gesetzt, die durch Vercrimpen an der Zylinderwand 20 angebracht ist.

Die Montage erfolgt, indem zuerst die Druckkammer 10 bei verschlossener erster Öffnung 12 mit Druckgas über die offene zweite Öffnung 16 befüllt wird. Anschließend wird diese zweite Öffnung 16 mittels der zweiten Membran 18 geschlossen.

Die umlaufende Vertiefung 50 bildet eine Blende, die innerhalb des zuvor erwähnten maximalen Abstandes von 15 mm stromaufwärts bzw. stromabwärts der Membran 14 und ihrer zugeordneten Öffnung 12 liegt. Da die Querschnittsfläche mit dem Durchmesser D1 im Bereich der Vertiefung 50 geringer ist als die Querschnittsfläche der ersten Öffnung 12 und auch geringer ist als die Summe der durchströmten Querschnittsflächen der Öffnungen des Siebes 28, ist die durch die Vertiefung 50 innenseitig begrenzte Öffnung die der Membran 14 zugeordnete Öffnung. Diese Öffnung mit Durchmesser D1 ist deutlich größer als die Querschnittsfläche mit dem Durchmesser d1, die der Membran 18 zugeordnet ist und in diesem Fall durch die engste Stelle des Membranhalters 52 definiert ist, da der Membranhalter an dieser Stelle noch keine 15 mm von der Membran 18 entfernt ist.

Bei beiden Ausführungsformen wird der Durchmesser der ersten Membran 14 maximiert, er entspricht fast (bis auf wenigstens 85 %) dem Durchmesser der Druckkammer 10 unmittelbar an der Stirnseite mit der ersten Öffnung 12, d.h. es wird fast die gesamte die Druckkammer 10 begrenzende Stirnwand durch die Membran 14 gebildet und freigelegt, wenn der Gasgenerator aktiviert wird. Zünder 34, erste und zweite Membran 14, 18 sind miteinander fluchtend und konzentrisch zu der Längsachse A ausgerichtet.

## Patentansprüche

1. Gasgenerator, insbesondere für Fahrzeuginsassen-Rückhaltesysteme, mit
einer mit Druckgas gefüllten, langgestreckten Druckkammer (10),
einem außerhalb der Druckkammer (10) angeordneten pyrotechnischen Zünder (34),
einer dem Zünder (34) nahen ersten Membran (14), die eine erste Öffnung (12) schließt,
einer vom Zünder (34) entfernteren zweiten Membran (18), die an dem dem Zünder (34) entgegengesetzten axialen Ende der Druckkammer (10) angeordnet ist und eine zweite Öffnung (16) schließt, die eine Ausströmöffnung der Druckkammer (10) ist,
einer mit einem pyrotechnischem Treibsatz (32) gefüllten Brennkammer (30),
wobei beide Membrane (14, 18) auf Aktivieren des Zünders (34) zerstört werden,
**dadurch gekennzeichnet, daß**
die Druckkammer (10) an ihren axialen entgegengesetzten Enden durch die beiden Membrane (14, 18) nach außen geschlossen ist,
die Brennkammer (30) außerhalb der geschlossenen Druckkammer (10) zwischen dem Zünder (34) und der ersten Membran (14) angeordnet ist und
die erste Membrane (14) so ausgebildet ist, daß sie bei einem höheren Berstdruck reißt als die zweite Membran (18).

2. Gasgenerator nach Anspruch 1, **dadurch gekennzeichnet, daß** eine der ersten Membran (14) zugeordnete erste Öffnung (12) oder erste Öffnungsanordnung eine wenigstens gleich große Querschnittsfläche wie eine der zweiten Membran (18) zugeordnete zweite Öffnung (16) oder Öffnungsanordnung besitzt.

3. Gasgenerator nach Anspruch 2, **dadurch gekennzeichnet, daß** die zugeordnete Öffnung die durch die jeweilige Membran (14, 18) geschlossene Öffnung (12 bzw. 16) ist.

4. Gasgenerator nach Anspruch 2, **dadurch gekennzeichnet, daß** die zugeordnete Öffnung oder Öffnungsanordnung diejenige Öffnung oder Öffnungsanordnung einer in unmittelbarer Nähe der Membran (14, 18) sitzenden Blende ist, deren gesamte durchströmte Querschnittsfläche kleiner als die Querschnittsfläche der durch die zugeordnete Membran (14, 18) geschlossene Öffnung (12 bzw. 16) ist, wobei die Blende mit ihrer oder ihren Öffnungen einen maximalen Abstand von 15 mm von der zugeordneten Membran (14, 18) hat.

5. Gasgenerator nach einem der Ansprüche 1 bis 4, **dadurch gekennzeichnet, daß** die erste und die zweite Membran (14, 18) zueinander fluchtend ausgerichtet sind.

6. Gasgenerator nach einem der vorhergehenden Ansprüche, **dadurch gekennzeichnet, daß** an den Stirnseiten der Druckkammer (10) die Öffnungen (12, 16) vorgesehen sind.

7. Gasgenerator nach einem der vorhergehenden Ansprüche, **dadurch gekennzeichnet, daß** der Abstand der Membran (14, 18) zwischen dem Fünfbis Dreizehnfachen des größten Innendurchmessers (D) der Druckkammer (10) ist.

8. Gasgenerator nach einem der vorhergehenden Ansprüche, **dadurch gekennzeichnet, daß** die Querschnittsfläche der zugeordneten ersten Öffnung (12) etwa 1,1 bis zehnmal größer als die der zugeordneten zweiten Öffnung (16) ist.

9. Gasgenerator nach einem der vorhergehenden Ansprüche, **dadurch gekennzeichnet, daß** die Querschnittsfläche der zugeordneten ersten Öffnung (12) etwa 1,3 bis zehnmal, insbesondere etwa 1,3 bis dreimal größer als die der zugeordneten zweiten Öffnung (16) ist.

10. Gasgenerator nach einem der vorhergehenden Ansprüche, **dadurch gekennzeichnet, daß** die erste Membran (14) unmittelbar an der Innenseite der zylindrischen Außenwand der Druckkammer (10) angebracht oder einstückiger Bestandteil der zylindrischen Außenwand der Druckkammer (10) ist.

11. Gasgenerator nach Anspruch 10, **dadurch gekennzeichnet, daß** die Druckkammer (10) durch eine als separates Teil ausgebildete Zylinderwand (20), die wenigstens einen Abschnitt der zylindrischen Außenwand bildet, und ein hülsenförmiges Verschlußteil (26) begrenzt ist, dessen Boden die erste Membran (14) bildet.

12. Gasgenerator nach einem der vorhergehenden Ansprüche, **dadurch gekennzeichnet, daß** sich die Druckkammer (10) zur zweiten Membran (18) verjüngt.

13. Gasgenerator nach Anspruch 12, **dadurch gekennzeichnet, daß** der verjüngte Abschnitt in Strömungsrichtung (S) von der ersten zur zweiten Membran (14, 18) ausschließlich zur zweiten Membran (18) hin schräg geneigte Flächen (40, 42) besitzt.

14. Gasgenerator nach einem der vorhergehenden Ansprüche, **dadurch gekennzeichnet, daß** in der Druckkammer (10) vor ihrem Öffnen ein Druck zwischen 240 bis 1500 bar herrscht.

15. Gasgenerator nach einem der vorhergehenden Ansprüche, **dadurch gekennzeichnet, daß** die zweite Membran (18) dünner als die erste Membran (14) ist.

## Claims

1. A gas generator, in particular for vehicle occupant restraint systems, comprising
an elongated pressure chamber (10) filled with compressed gas,
a pyrotechnic igniter (34) arranged outside the pressure chamber (10),
a first membrane (14) which is close to the igniter (34) and closes a first opening (12),
a second membrane (18) which is more remote from the igniter (34) and is arranged at the axial end of the pressure chamber (10) opposite to the igniter (34), and which closes a second opening (16) which is an outflow opening of the pressure chamber (10),
a combustion chamber (30) filled with a pyrotechnic propellant charge (32),
both membranes (14, 18) being destroyed on activation of the igniter (34),
**characterized in that**
at its opposite axial ends, the pressure chamber (10) is closed to the outside by the two membranes (14, 18),
the combustion chamber (30) is arranged outside the closed pressure chamber (10) between the igniter (34) and the first membrane (14), and
the first membrane (14) is formed such that it tears at a higher bursting pressure than the second membrane (18).

2. The gas generator according to claim 1, **characterized in that** a first opening (12) or first opening arrangement, associated with the first membrane (14), has a cross-sectional area at least equal in size to that of a second opening (16) or opening arrangement associated with the second membrane (18).

3. The gas generator according to claim 2, **characterized in that** the associated opening is the opening (12 and 16, respectively) closed by the respective membrane (14, 18).

4. The gas generator according to claim 2, **characterized in that** the associated opening or opening arrangement is that opening or opening arrangement of a blind which is seated in the immediate vicinity of the membrane (14, 18) and the entire flow-through cross-sectional area of which is smaller than the cross-sectional area of the opening (12 and 16, respectively) closed by the associated membrane (14, 18), the blind having its opening or openings spaced from the associated membrane (14, 18) at a maximum distance of 15 mm.

5. The gas generator according to any of claims 1 to 4, **characterized in that** the first and second membranes (14, 18) are oriented in alignment with each other.

6. The gas generator according to any of the preceding claims, **characterized in that** the openings (12, 16) are provided on the end faces of the pressure chamber (10).

7. The gas generator according to any of the preceding claims, **characterized in that** the spacing of the membrane (14, 18) is between five and thirteen times the largest internal diameter (D) of the pressure chamber (10).

8. The gas generator according to any of the preceding claims, **characterized in that** the cross-sectional area of the associated first opening (12) is approximately 1.1 to ten times larger than that of the associated second opening (16).

9. The gas generator according to any of the preceding claims, **characterized in that** the cross-sectional area of the associated first opening (12) is approximately 1.3 to ten times, in particular approximately 1.3 to three times, larger than that of the associated second opening (16).

10. The gas generator according to any of the preceding claims, **characterized in that** the first membrane (14) is fitted directly to the inner side of the cylindrical outer wall of the pressure chamber (10) or is an integral component of the cylindrical outer wall of the pressure chamber (10).

11. The gas generator according to claim 10, **characterized in that** the pressure chamber (10) is delimited by a cylinder wall (20) which is configured as a separate part and forms at least a section of the cylindrical outer wall, and by a sleeve-shaped closure part (26) the base of which forms the first membrane (14).

12. The gas generator according to any of the preceding claims, **characterized in that** the pressure chamber (10) tapers towards the second membrane (18).

13. The gas generator according to claim 12, **characterized in that** in the flow direction (S) from the first to the second membrane (14, 18), the tapered section has surfaces (40, 42) inclined obliquely exclusively towards the second membrane (18).

14. The gas generator according to any of the preceding claims, **characterized in that** a pressure between 240 and 1500 bar prevails in the pressure chamber (10) before its being opened.

15. The gas generator according to any of the preceding claims, **characterized in that** the second membrane (18) is thinner than the first membrane (14).

## Revendications

1. Générateur de gaz, en particulier pour des système de retenue de passager de véhicule, comportant
une chambre de compression (10) allongée remplie de gaz sous pression,
un allumeur (34) pyrotechnique agencé en dehors de la chambre de compression,
une première membrane (14) proche de l'allumeur (34) et fermant une première ouverture (12),
une deuxième membrane (18) éloignée de l'allumeur (34), qui est agencée à l'extrémité axiale située à l'opposé de l'allumeur (34), de la chambre de compression, et qui ferme une deuxième ouverture (16) qui est une ouverture d'échappement de la chambre de compression (10),
une chambre de combustion (30) remplie d'une charge propulsive (32) pyrotechnique,
les deux membranes (14, 18) étant détruites sur activation de l'allumeur (34),
**caractérisé en ce que**
au niveau de ses extrémités axiales opposées, la chambre de compression (10) est fermée vis-à-vis de l'extérieur par les deux membranes (14, 18),
la chambre de combustion (30) est agencée entre l'allumeur (34) et la première membrane (14) en dehors de la chambre de compression (10) fermée et
la première membrane (14) est réalisée de telle sorte qu'elle se déchire à une pression d'éclatement plus élevée que la deuxième membrane (18).

2. Générateur de gaz selon la revendication 1, **caractérisé en ce qu'**une première ouverture (12) ou un premier agencement d'ouverture associé(e) à la première membrane (14) possède une superficie de section au moins aussi grande qu'une deuxième ouverture (16) ou agencement d'ouverture associé(e) à la deuxième membrane (18):

3. Générateur de gaz selon la revendication 2, **caractérisé en ce que** l'ouverture associée est l'ouverture (12 ou 16, respectivement) fermée par la membrane (14, 18) respective.

4. Générateur de gaz selon la revendication 2, **caractérisé en ce que** l'ouverture ou l'agencement d'ouverture associé(e) est l'ouverture ou l'agencement d'ouverture d'un obturateur logé à proximité directe de la membrane (14, 18), dont la superficie de section traversée dans l'ensemble par l'écoulement est inférieure à la superficie de section de l'ouverture (12, 16) respective fermée par la membrane (14, 18) associée, l'obturateur ayant avec son ou ses ouvertures une distance maximale de 15 mm par rapport à la membrane (14, 18) associée.

5. Générateur de gaz selon l'une des revendications 1 à 4, **caractérisé en ce que** les première et deuxième membranes (14, 18) sont alignées en affleurement l'une par rapport à l'autre.

6. Générateur de gaz selon l'une des revendications précédentes, **caractérisé en ce que** les ouvertures (12, 16) sur prévues sur les faces frontales de la chambre de compression (10).

7. Générateur de gaz selon l'une des revendications précédentes, **caractérisé en ce que** la distance de la membrane (14, 18) est entre cinq à treize fois plus grande que le plus grand diamètre intérieur (D) de la chambre de compression (10).

8. Générateur de gaz selon l'une des revendications précédentes, **caractérisé en ce que** la superficie de section de la première ouverture (12) associée est approximativement entre 1,1 et dix fois plus grande que la deuxième ouverture (16) associée.

9. Générateur de gaz selon l'une des revendications précédentes, **caractérisé en ce que** la superficie de section de la première ouverture (12) associée est approximativement entre 1,3 à dix fois, en particulier 1,3 à trois fois plus grande que la deuxième ouverture (16) associée.

10. Générateur de gaz selon l'une des revendications précédentes, **caractérisé en ce que** la première membrane (14) est montée directement sur la face intérieure de la paroi extérieure cylindrique de la chambre de compression (10) ou fait partie d'un seul tenant de la paroi extérieure cylindrique de la chambre de compression (10).

11. Générateur de gaz selon la revendication 10, **caractérisé en ce que** la chambre de compression (10) est limitée par une paroi cylindrique (20) réalisée en tant que partie séparée et qui forme au moins un tronçon de la paroi extérieure cylindrique, et une partie de fermeture (26) en forme de douille dont le fond forme la première membrane (14).

12. Générateur de gaz selon l'une des revendications précédentes, **caractérisé en ce que** la chambre de compression (10) se rétrécit vers la deuxième membrane (18).

13. Générateur de gaz selon la revendication 12, **caractérisé en ce qu'**en direction d'écoulement (S) depuis la première membrane (14) vers la deuxième membrane (18), le tronçon rétréci possède des surfaces (40, 42) inclinées uniquement vers la deuxième membrane (18).

14. Générateur de gaz selon l'une des revendications précédentes, **caractérisé en ce qu'**une pression entre 240 et 1500 bar règne dans la chambre de compression (10) avant son ouverture.

15. Générateur de gaz selon l'une des revendications précédentes, **caractérisé en ce que** la deuxième membrane (18) est plus mince que la première membrane (14).
